# EUROPEAN PATENT SPECIFICATION

(11) **EP 2 514 983 B1**
(45) Date of publication and mention of the grant of the patent: **11.07.2018**
(21) Application number: 12164417.3
(22) Date of filing: 17.04.2012
(51) Int. Cl.: F16C 19/18, F16C 33/58, F16C 35/06, F16H 57/021, F16H 57/037

(54) **Double row ball bearing and pinion shaft support device**
Zweireihiges Kugellager und Ritzelwellen-Trägervorrichtung
Roulement à billes double et dispositif de support d'arbre de pignon

(30) Priority: 21.04.2011 JP 2011094681
(43) Date of publication of application: 24.10.2012
(73) Proprietor: JTEKT Corporation, Osaka-shi, Osaka 542-8502 (JP)
(72) Inventor: Ohshima, Hiroyuki, Osaka-shi, Osaka 542-8502 (JP)
(74) Representative: Winter, Brandl, Fürniss, Hübner, Röss, Kaiser, Polte - Partnerschaft mbB

(56) References cited:
- EP-A1- 1 574 729
- JP-A- 2004 183 745
- JP-A- 2008 128 450

## Description

The invention relates to a double row ball bearing and a pinion shaft support device and, more specifically, to a double row ball bearing that is called a tandem-type ball bearing suitable for supporting a pinion shaft in, for example, a differential gear unit of a motor vehicle, and a pinion shaft support device that includes such a double row ball bearing.

As a pinion shaft support device for a vehicle, there is a conventional pinion shaft support device that supports a pinion shaft with the use of a tandem-type double row ball bearing (refer to JP 2004-183745 A). An outer ring of the double row ball bearing is fitted to a housing, and a small-diameter-side end face of the outer ring is received by an outer ring receiving portion formed in the housing. An inner ring of the double row ball bearing is fitted to the pinion shaft, and a large-diameter-side end face of the inner ring is received by an inner ring receiving portion formed in the pinion shaft.

In such a double row ball bearing for a pinion shaft support device, an engaged portion that facilitates removal of the outer ring from the housing and an engaged portion that facilitates removal of the inner ring from the pinion shaft are sometimes required. When the outer ring is removed from the housing, a jig is inserted into the outer ring from the outside of the pinion shaft support device and engaged with the engaged portion, and then the jig is pulled out together with the outer ring. Similarly, when the inner ring is removed from the pinion shaft, a jig is inserted into the inner ring from the outside of the pinion shaft support device and engaged with the engaged portion, and then the jig is pulled out together with the inner ring. When each engaged portion is formed of a groove, a foreign object easily enters the groove. Therefore, the bearing may be easily damaged. Then, according to a conventional technique, with regard to the outer ring, a pitch diameter of ball set on the small-diameter side is reduced to make the bore diameter of a small-diameter-side shoulder portion of the outer ring smaller than the bore diameter of the outer ring Therefore, the bearing may be easily damaged. Then, according to a conventional technique, with regard to the outer ring, a pitch diameter of ball set on the small-diameter side is reduced to make the bore diameter of a small-diameter-side shoulder portion of the outer ring smaller than the bore diameter of the outer ring receiving portion of the housing. In this way, a bore portion of the small-diameter-side shoulder portion is used as the engaged portion. In addition, with regard to the inner ring, the pitch diameter of ball set on the large-diameter side is increased to make the outer diameter of a large-diameter-side shoulder portion of the inner ring larger than the outer diameter of the inner ring receiving portion of the pinion shaft. In this way, an outer peripheral portion of the large-diameter-side shoulder portion is used as the engaged portion.

In the above-described double row ball bearing for a pinion shaft support device, the pitch diameter of ball set (PCD) is desirably large at the small-diameter side and small at the large-diameter side so that balls having the optimum size are arranged in each row within a limited arrangement space. However, in the conventional technique, the pitch diameter of ball set on the small-diameter side is reduced to reduce the bore diameter of the small-diameter-side shoulder portion of the outer ring or the pitch diameter of ball set on the large-diameter side is increased to increase the outer diameter of the large-diameter-side shoulder portion of the inner ring, thereby forming the engaged portion. Therefore, the restriction on the design of the double row ball bearing makes it difficult to set the pitch diameters of ball sets to optimum values. Furthermore, a pinion shaft device according to the preamble of claim 1 is known from prior art - see for example EP 1 574 729 A1. JP 2008 128450 A discloses a method of concurrently grinding faces of a bearing device.

It is an object of the invention to provide a double row ball bearing in which engaged portions that facilitate removal of the double row ball bearing are formed and pitch diameters of ball sets are set to optimum values, and a pinion shaft support device that includes the double row ball bearing. The object is achieved by the features of claim 1 and the features of claim 3. Advantageous further developments are subject-matter of the dependent claim.

An aspect of the invention relates to a double row ball bearing, including: an outer ring that has double row raceway surfaces having diameters different from each other; an inner ring that has double row raceway surfaces that correspond to the double row raceway surfaces of the outer ring; and a plurality of small-diameter-side balls and a plurality of large-diameter-side balls that are arranged between the double row raceway surfaces of the outer ring and the double row raceway surfaces of the inner ring with different pitch diameters of ball sets. An inward protruding portion that extends further radially inward than an axially outer end of a small-diameter-side raceway surface among the double row raceway surfaces of the outer ring is formed on a small-diameter-side end portion of the outer ring so as not to contact the small-diameter-side balls.

Features, advantages, and technical and industrial significance of exemplary embodiments of the invention will be described below with reference to the accompanying drawings, in which like numerals denote like elements, and wherein:
FIG. 1 is a sectional view that shows a double row ball bearing and a pinion shaft support device according to a first embodiment of the invention;
FIG. 2 is an enlarged sectional view of main portions in FIG. 1; and
FIG. 3 is an enlarged sectional view of main portions of a double row ball bearing and a pinion shaft support device according to a second embodiment of the invention.

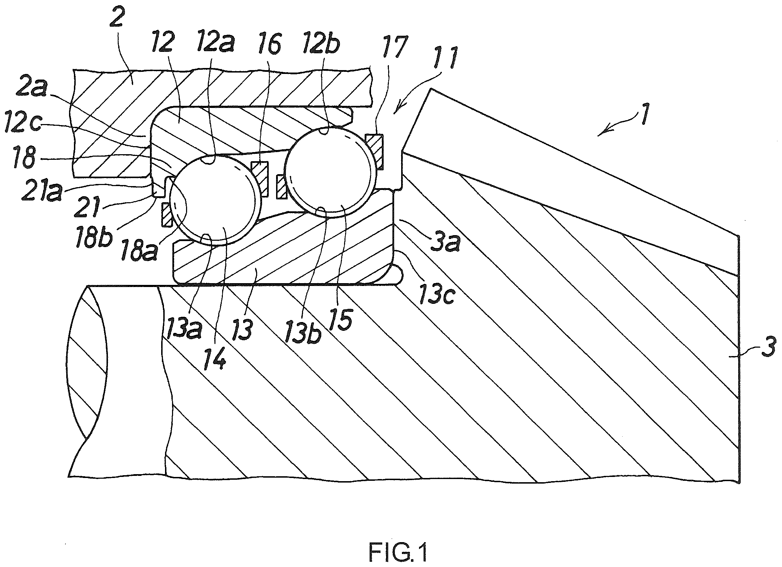

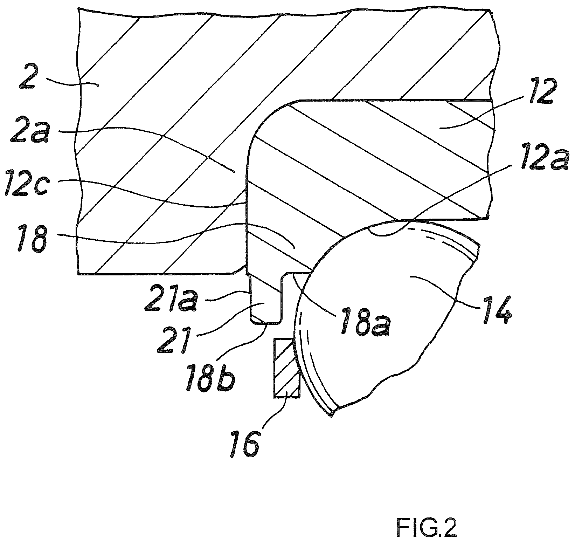

Hereafter, embodiments of the invention will be described with reference to the accompanying drawings. FIG. 1 and FIG. 2 show a double row ball bearing and a pinion shaft support device that includes the double row ball bearing according to a first embodiment of the invention.

A double row ball bearing 11 is of a so-called tandem type ball bearing, and includes an outer ring 12, an inner ring 13, a plurality of small-diameter-side balls 14, a plurality of large-diameter-side balls 15, a small-diameter-side cage 16 and a large-diameter-side cage 17. The outer ring 12 has double row raceway surfaces 12a and 12b having diameters different from each other. The inner ring 13 has double row raceway surfaces 13a and 13b that correspond to the raceway surfaces 12a and 12b of the outer ring 12, respectively. The small-diameter-side balls 14 are arranged between the raceway surface 12a of the outer ring 12 and the raceway surface 13a of the inner ring 1 3, and the large-diameter-side balls 15 are arranged between the raceway surface 12b of the outer ring 12 and the raceway surface 13b of the inner ring 13. The small-diameter-side balls 14 and the large-diameter-side balls 15 are arranged with different pitch diameters of ball sets. The small-diameter-side cage 16 retains the small-diameter-side balls 14. The large-diameter-side cage 17 retains the large-diameter-side balls 15.

The bore diameter of the left raceway surface 12a of the outer ring 12 is smaller than the bore diameter of the right raceway surface 12b of the outer ring 12, as shown in FIG. 1. The right end portion side of the outer ring 12 is a counter bored portion. A small-diameter-side shoulder portion 18 that receives the small-diameter-side balls 14 is formed at the left end portion (small-diameter-side end portion) of the outer ring 12, as shown in FIG. 1.

The outer diameter of the left-side raceway surface 13a of the inner ring 13 is smaller than the outer diameter of the right-side raceway surface 13b of the inner ring 13, as shown in FIG. 1. The left end portion side of the inner ring 13 is a counter bored portion. A large-diameter-side shoulder portion 19 that receives the large-diameter-side balls 15 is formed at the right end portion (large-diameter-side end portion) of the inner ring 13.

The small-diameter-side shoulder portion 18 of the outer ring 12 has a first bore portion 18a and a second bore portion 18b. The first bore portion 18a is contiguous with the axially outer end of the small-diameter-side raceway surface 12a, and has a bore diameter equal to the diameter of the axially outer end of the small-diameter-side raceway surface 12a. The second bore portion 18b is located axially outward of the first bore portion 18a, and has a bore diameter smaller than the bore diameter of the first bore portion 18a.

The pitch diameter of a set of the small-diameter-side balls 14 is smaller than the pitch diameter of a set of the large-diameter-side balls 15. The contact angle of each small-diameter-side ball 14 and the contact angle of each large-diameter-side ball 15 are set in the same direction (but the contact angles are not limited to the same angle). In addition, each of the cages 16 and 17 is formed in a tapered shape such that the diameter increases from the left side toward the right side as a whole, as shown in FIG. 1.

The outer ring 12 is press-fitted from its left end portion side (small-diameter-side end portion) to a housing 2, and fixed to the housing 2. The inner ring 13 is press-fitted from its right end portion side (large-diameter-side end portion) to a pinion shaft 3, and fixed to the pinion shaft 3. A small-diameter-side end face 12c of the outer ring 12 is received by an outer ring receiving portion 2a formed in the housing 2. A large-diameter-side end face 13c of the inner ring 13 is received by an inner ring receiving portion 3a formed in the pinion shaft 3. In this way, the pinion shaft support device 1 that supports the pinion shaft 3 with the use of the double row ball bearing 11 is formed.

The pinion shaft support device 1 is used to, for example, support the pinion shaft 3 of a differential gear unit. In this case, the outer ring 12 is sometimes required to be removed from the housing 2. In addition, the inner ring 13 is sometimes required to be removed from the pinion shaft 3.

In the above-described double row ball bearing 11, in order to facilitate removal of the outer ring 12 from the housing 2, the bore diameter of the second bore portion 18b of the small-diameter-side shoulder portion 18 of the outer ring 12 is made smaller than the bore diameter of the outer ring receiving portion 2a of the housing 2. Thus, the small-diameter-side shoulder portion 18 of the outer ring 12 is provided with an annular inward protruding portion 21 that extends further radially inward than the inner periphery of the outer ring receiving portion 2a and that serves as an engaged portion at the time of removal of the outer ring 12. The first bore portion 18a is formed axially inward of the second bore portion 18b, so the inward protruding portion 21 does not contact the small-diameter-side balls 14. The bore diameter of the first bore portion 18a is substantially equal to the bore diameter of the outer ring receiving portion 2a.

With the above-described double row ball bearing 11, the bore diameter of the first bore portion 18a is set to an appropriate value so that the target pitch diameter of the set of the small-diameter-side balls 14 is achieved. The bore diameter of the second bore portion 18b is set at a value corresponding to the bore diameter of the outer ring receiving portion 2a irrespective of the bore diameter of the first bore portion 18a. Because the inward protruding portion 21 does not to contact the small-diameter-side balls 14, the diameter of the axially outer end of the small-diameter-side raceway surface 12a that defines the pitch diameter of the set of the small-diameter-side balls 14 and the diameter of the inward protruding portion 21 that serves as an engaged portion at the time of removal of the outer ring 12 are set individually. Therefore, the pitch diameter of ball set on the small-diameter side is set to the optimum value even though an engaged portion is formed.

An axially outer face 21a of the inward protruding portion 21 is located axially inward (dented) with respect to the small-diameter-side end face 12c of the outer ring 12. Then, after the outer ring 12 is formed through turning (rough machining using a cutting tool), the small-diameter-side end face 12c of the outer ring 12 is formed as a ground surface (formed through finishing using a grinding wheel), and the axially outer face 21a of the inward protruding portion 21 remains as a turned surface. Thus, a period of time required for grinding is substantially equal to that in the conventional technique (where the inward protruding portion 21 is not formed). Therefore, an increase in manufacturing time (manufacturing cost) resulting from providing the inward protruding portion 21 is suppressed.

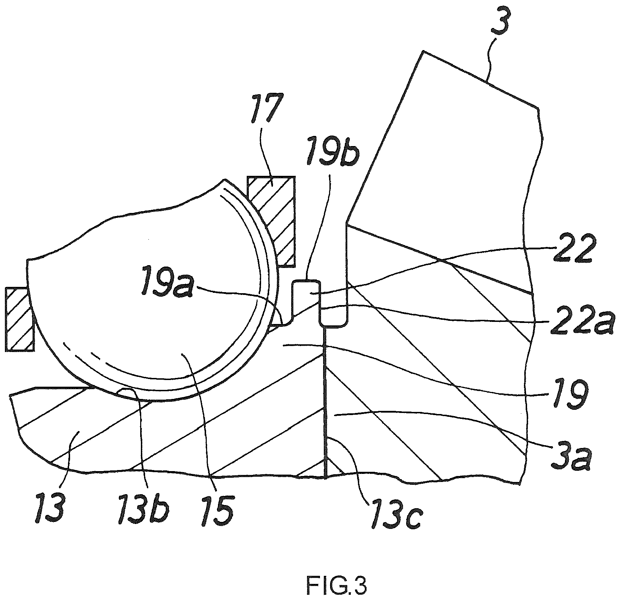

FIG. 3 shows a double row ball bearing and a pinion shaft support device that includes the double row ball bearing according to a second embodiment of the invention. The second embodiment is suitably employed in the case where the inner ring 13 is required to be removed from the pinion shaft 3. In the second embodiment, the large-diameter-side end portion of the inner ring 13 has an annular outward protruding portion 22 that serves as an engaged portion at the time of removal of the inner ring 13.

The large-diameter-side shoulder portion 19 of the inner ring 13 has a first outer peripheral portion 19a and a second outer peripheral portion 19b. In order to remove the inner ring 13 from the pinion shaft 3, the first outer peripheral portion 19a needs to be contiguous with the axially outer end of the large-diameter-side raceway surface 13b and have an outer diameter equal to the diameter of the axially outer end of the large-diameter-side raceway surface 13b, and the second outer peripheral portion 19b needs to be located axially outward of the first outer peripheral portion 19a and have an outer diameter larger than the outer diameter of the first outer peripheral portion 19a. Then, the outer diameter of the second outer peripheral portion 19b is set larger than the outer diameter of the inner ring receiving portion 3a formed in the pinion shaft 3 to thereby form the outward protruding portion 22 that extends further radially outward than the outer periphery of the inner ring receiving portion 3a and serves as an engaged portion at the time of removal of the inner ring 13.

Note that, the diameter of the axially outer end of the large-diameter-side raceway surface 13b that defines the pitch diameter of the set of the large-diameter-side balls 15 and the diameter of the outward protruding portion 22 that serves as an engaged portion at the time of removal of the inner ring 13 are set individually. Thus, it is not necessary to increase the pitch diameter of ball set on the large-diameter side in order to form an engaged portion. Therefore, the pitch diameter of ball set on the large-diameter side is set to the optimum value even though an engaged portion is formed.

When it is not necessary to remove the outer ring 12 from the housing 2, only the outward protruding portion 22 of the inner ring 13 is formed. On the other hand, when it is necessary to remove the outer ring 12 from the housing 2 and to remove the inner ring 13 from the pinion shaft 3, the inward protruding portion 21 is formed in the outer ring 12, and the outward protruding portion 22 is formed in the inner ring 13.

It is desirable that the large-diameter-side end face 13c of the inner ring 13 be formed as a ground surface, and the axially outer face 22a of the outward protruding portion 22 be formed as a turned surface axially inward of the large-diameter-side end face 13c of the inner ring 13. In this way, when the outward protruding portion 22 is formed in the inner ring 13, a period of time required for grinding is substantially equal to that in the conventional technique (in which the outward protruding portion 22 is not formed). Therefore, an increase in manufacturing time (manufacturing cost) resulting from forming the outward protruding portion 22 is suppressed.

Note that, if the height of the annular inward protruding portion 21 and the height of the annular outward protruding portion 22 are about 1 mm with respect to the inner periphery of the outer ring receiving portion 2a of the housing 2 and the outer periphery of the inner ring receiving portion 3a of the pinion shaft 3, respectively, the inward protruding portion 21 and the outward protruding portion 22 sufficiently serve as engaged portions at the time of removal. The height of each of the inward protruding portion 21 and the outward protruding portion 22 may be, for example, about 1 to 2.5 mm.

The pinion shaft support device 1 is suitable for supporting a pinion shaft for a vehicle, for example, a pinion shaft in each of a differential gear unit, a transaxle unit and a transfer unit.

In the double row ball bearing according to the invention, the inward protruding portion that extends further radially inward than the axially outer end of the small-diameter-side raceway surface is formed on the small-diameter-side end portion of the outer ring so as not to contact with the small-diameter-side balls. Thus, the diameter of the axially outer end of the small-diameter-side raceway surface that defines the pitch diameter of ball set on the small-diameter side and the diameter of the inward protruding portion that serves as an engaged portion at the time of removal of the outer ring are set individually. Therefore, the pitch diameter of ball set on the small-diameter side is set to the optimum value even though an engaged portion is formed.

## Claims

1. A pinion shaft support device (1) having a double row ball bearing (11) comprising:
an outer ring (12) that has double row raceway surfaces (12a, 12b) having diameters different from each other;
an inner ring (13) that has double row raceway surfaces (13a, 13b) that correspond to the double row raceway surfaces (12a, 12b) of the outer ring (12);
a plurality of small-diameter-side balls (14) and a plurality of large-diameter-side balls (15) that are arranged between the double row raceway surfaces (12a, 12b) of the outer ring (12) and the double row raceway surfaces (13a, 13b) of the inner ring (13) with different pitch diameters of ball sets, and
an inward protruding portion (21) that extends further radially inward than an axially outer end of a small-diameter-side raceway surface (12a) among the double row raceway surfaces (12a, 12b) of the outer ring (12) is formed on a small-diameter-side end portion of the outer ring (12) so as not to contact the small-diameter-side balls (14),
wherein, in said pinion shaft support device (1), the said outer ring (12) of the double row ball bearing (11) is fitted to a housing (2) and a small-diameter-side end face (12c) of the outer ring (12) is received by an outer ring receiving portion (2a) formed in the housing (2), and the said inner ring (13) of the double row ball bearing (11) is fitted to a pinion shaft (3) and a large-diameter-side end face (13c) of the inner ring (13) is received by an inner ring receiving portion (3a) formed in the pinion shaft (3), wherein
the inward protruding portion (21) extends further radially inward than an inner periphery of the outer ring receiving portion (2a) of the housing (2), **characterized in that**
a small-diameter-side end face (12c) of the outer ring (12) is formed as a ground surface, and an axially outer face (21a) of the inward protruding portion (21) is formed as a turned surface located axially inward of the small-diameter-side end face (12c) of the outer ring (12), and
the axially outer face (21a) of the inward protruding portion (21) is disposed so as not to overlap with the small-diameter-side raceway surface (12a) of the outer ring (12) in the axial direction.

2. The pinion shaft support device (1) according to claim 1 , wherein an outward protruding portion (22) that extends further radially outward than an axially outer end of a large-diameter-side raceway surface (13b) among the double row raceway surfaces (13a, 13b) of the inner ring (13) is formed on a large-diameter-side end portion of the inner ring (13), and the outward protruding portion (22) extends further radially outward than an outer periphery of the inner ring receiving portion (3a) so as not to contact the large-diameter-side balls (15).

3. A double row ball bearing (11) comprising:
an outer ring (12) that has double row raceway surfaces (12a, 12b) having diameters different from each other;
an inner ring (13) that has double row raceway surfaces (13a, 13b) that correspond to the double row raceway surfaces (12a, 12b) of the outer ring (12); and
a plurality of small-diameter-side balls (14) and a plurality of large-diameter-side balls (15) that are arranged between the double row raceway surfaces (12a, 12b) of the outer ring (12) and the double row raceway surfaces (13a, 13b) of the inner ring (13) with different pitch diameters of ball sets, wherein:
an inward protruding portion (21) that extends further radially inward than an axially outer end of a small-diameter-side raceway surface (12a) among the double row raceway surfaces (12a, 12b) of the outer ring (12) is formed on a small-diameter-side end portion of the outer ring (12) so as not to contact the small-diameter-side balls (14), **characterized in that**
a small-diameter-side end face (12c) of the outer ring (12) is formed as a ground surface, and an axially outer face (21a) of the inward protruding portion (21) is formed as a turned surface located axially inward of the small-diameter-side end face (12c) of the outer ring (12), and
the axially outer face (21a) of the inward protruding portion (21) is disposed so as not to overlap with the small-diameter-side raceway surface (12a) of the outer ring (12) in the axial direction.

## Patentansprüche

1. Ritzelwellen-Trägervorrichtung (1) mit einem zweireihigen Kugellager (11), mit:
einem Außenring (12), welcher zweireihige Laufbahn-Oberflächen (12a, 12b) mit voneinander verschiedenen Durchmessern aufweist;
einem Innenring (13), welcher zweireihige Laufbahn-Oberflächen (13a, 13b) aufweist, die den zweireihigen Laufbahn-Oberflächen (12a, 12b) des Außenrings (12) entsprechen;
einer Vielzahl von kleindurchmesserseitigen Kugeln (14) und einer Vielzahl von großdurchmesserseitigen Kugeln (15), die zwischen den zweireihigen Laufbahn-Oberflächen (12a, 12b) des Außenrings (12) und den zweireihigen Laufbahn-Oberflächen (13a, 13b) des Innenrings (13) mit unterschiedlichen Teilkreisdurchmessern der Kugelsätze angeordnet sind, und
einem nach innen vorstehenden Abschnitt (21), welcher sich weiter nach radial innen erstreckt als ein axial äußeres Ende der kleindurchmesserseitigen Laufbahn-Oberfläche (12a) der zweireihigen Laufbahn-Oberflächen (12a, 12b) des Außenrings (12), welcher an einem kleindurchmesserseitigen Endabschnitt des Außenrings (12) ausgebildet ist, um die kleindurchmesserseitigen Kugeln (14) nicht zu berühren,
wobei in der Ritzelwellen-Trägervorrichtung der Außenring (12) des zweireihigen Kugellagers (11) in ein Gehäuse (2) eingepasst ist und eine kleindurchmesserseitige Endfläche (12c) des Außenrings (12) durch einen Außenring-Aufnahmeabschnitt (2a) aufgenommen ist, welcher in dem Gehäuse (2) ausgebildet ist, und der Innenring (13) des zweireihigen Kugellagers (11) auf eine Ritzelwelle (3) gepasst ist, und eine großdurchmesserseitige Endfläche (13c) des Innenrings (13) durch einen Innenring-Aufnahmeabschnitt (3a) aufgenommen ist, welcher in der Ritzelwelle (3) ausgebildet ist, wobei
sich der nach innen vorstehende Abschnitt (21) weiter nach radial innen erstreckt als ein innerer Umfang des Außenring-Aufnahmeabschnitts (2a) des Gehäuses (2), **dadurch gekennzeichnet, dass**
eine kleindurchmesserseitige Endfläche (12c) des Außenrings (12) als eine geschliffene Oberfläche ausgebildet ist, und eine axial äußere Fläche (21a) des nach innen vorstehenden Abschnitts (21) als eine gedrehte Oberfläche ausgebildet ist, welche axial innerhalb der kleindurch messerseitigen Endfläche (12c) des Außenrings (12) angeordnet ist, und
die axial äußere Fläche (21a) des nach innen vorstehenden Abschnitts (21) derart angeordnet ist, dass sie sich mit der kleindurchmesserseitigen Laufbahn-Oberfläche (12a) des Außenrings (12) in Axialrichtung nicht überlappt.

2. Ritzelwellen-Trägervorrichtung (1) gemäß Anspruch 1, wobei ein nach außen vorstehender Abschnitt (22), welcher sich weiter nach radial außen erstreckt als ein axial äußeres Ende einer großdurchmesserseitigen Laufbahn-Oberfläche (13b) von den zweireihigen Laufbahn-Oberflächen (13a, 13b) des Innenrings (13), an einem großdurchmesserseitigen Endabschnitt des Innenrings (13) ausgebildet ist, und sich der nach außen vorstehende Abschnitt (22) weiter nach radial außen erstreckt als ein äußerer Umfang des Innenring-Aufnahmeabschnitts (3a), um die großdurchmesserseitigen Kugeln (15) nicht zu berühren.

3. Zweireihiges Kugellager (11), mit:
einem Außenring (12), welcher zweireihige Laufbahn-Oberflächen (12a, 12b) mit voneinander verschiedenen Durchmessern aufweist;
einem Innenring (13), welcher zweireihige Laufbahn-Oberflächen (13a, 13b) aufweist, die den zweireihigen Laufbahn-Oberflächen (12a, 12b) des Außenrings (12) entsprechen; und
einer Vielzahl an kleindurchmesserseitigen Kugeln (14) und einer Vielzahl an großdurchmesserseitigen Kugeln (15), welche zwischen den zweireihigen Laufbahn-Oberflächen (12a, 12b) des Außenrings (12) und den zweireihigen Laufbahn-Oberflächen (13a, 13b) des Innenrings (13) angeordnet sind und verschiedene Teilkreisdurchmesser der Kugelsätze aufweisen, wobei:
ein nach innen vorstehender Abschnitt (21), welcher sich weiter radial nach innen erstreckt als ein axial äußeres Ende einer kleindurchmesserseitigen Laufbahn-Oberfläche (12a) der zweireihigen Laufbahn-Oberflächen (12a, 12b) des Außenrings (12), an einem kleindurchmesserseitigen Endabschnitt des Außenrings (12) ausgebildet ist, um die kleindurchmesserseitigen Kugeln (14) nicht zu berühren, **dadurch gekennzeichnet, dass**
eine kleindurchmesserseitige Endfläche (12c) des Außenrings (12) als eine geschliffene Oberfläche ausgebildet ist, und eine axial äußere Fläche (21a) des nach innen vorstehenden Abschnitts (21) als eine gedrehte Oberfläche ausgebildet ist, welche axial innerhalb der kleindurchmesserseitigen Endfläche (12c) des Außenrings (12) angeordnet ist, und
die axial äußere Fläche (21a) des nach innen vorstehenden Abschnitts (21) derart angeordnet ist, dass sie sich in Axialrichtung mit der kleindurchmesserseitigen Laufbahn-Oberfläche (12a) des Außenrings (12) nicht überlappt.

## Revendications

1. Dispositif de support d'arbre de pignon (1) comportant un palier à billes à double rangée (11) comprenant :
une bague extérieure (12) qui comporte deux rangées de surfaces de chemin de roulement (12a, 12b) ayant des diamètres différents l'une de l'autre ;
une bague intérieure (13) qui comporte deux rangées de surfaces de chemin de roulement (13a, 13b) qui correspondent aux deux rangées de surfaces de chemin de roulement (12a, 12b) de la bague extérieure (12) ;
une pluralité de billes côté petit diamètre (14) et une pluralité de billes côté grand diamètre (15) qui sont agencées entre les deux rangées de surfaces de chemin de roulement (12a, 12b) de la bague extérieure (12) et les deux rangées de surfaces de chemin de roulement (13a, 13b) de la bague intérieure (13) avec différents diamètres primitifs des séries de billes, et
une partie faisant saillie vers l'intérieur (21) qui s'étend plus radialement vers l'intérieur qu'une extrémité axialement extérieure d'une surface de chemin de roulement côté petit diamètre (12a) parmi les deux rangées de surfaces de chemin de roulement (12a, 12b) de la bague extérieure (12) est formée sur une partie d'extrémité côté petit diamètre de la bague extérieure (12) de façon à ne pas entrer en contact avec les billes côté petit diamètre (14),
dans lequel, dans ledit dispositif de support d'arbre de pignon (1), ladite bague extérieure (12) dudit palier à billes à double rangée (11) est montée sur un carter (2) et une face d'extrémité côté petit diamètre (12c) de la bague extérieure (12) est reçue par une partie de réception de bague extérieure (2a) formée dans le carter (2) et ladite bague intérieure (13) du palier à billes à double rangée (11) est montée sur un arbre de pignon (3) et une face d'extrémité côté grand diamètre (13c) de la bague intérieure (13) est reçue par une partie de réception de bague intérieure (3a) formée dans l'arbre de pignon (3), dans lequel
la partie faisant saillie vers l'intérieur (21) s'étend plus radialement vers l'intérieur qu'une périphérie intérieure de la partie de réception de bague extérieure (2a) du carter (2), **caractérisé en ce que**
une face d'extrémité côté petit diamètre (12c) de la bague extérieure (12) est formée comme une surface rectifiée, et une face axialement extérieure (21a) de la partie faisant saillie vers l'intérieur (21) est formée comme une surface tournée située axialement vers l'intérieur de la face d'extrémité côté petit diamètre (12c) de la bague extérieure (12), et
la face axialement extérieure (21a) de la partie faisant saillie vers l'intérieur (21) est disposée de façon à ne pas être superposée avec la surface de chemin de roulement côté petit diamètre (12a) de la bague extérieure (12) dans la direction axiale.

2. Dispositif de support d'arbre de pignon (1) selon la revendication 1, dans lequel une partie faisant saillie vers l'extérieur (22) qui s'étend plus radialement vers l'extérieur qu'une extrémité axialement extérieure d'une surface de chemin de roulement côté grand diamètre (13b) parmi les deux rangées de surfaces de chemin de roulement (13a, 13b) de la bague intérieure (13) est formée sur une partie d'extrémité côté grand diamètre de la bague intérieure (13), et la partie faisant saillie vers l'extérieur (22) s'étend plus radialement vers l'extérieur qu'une périphérie extérieure de la partie de réception de bague intérieure (3a) de façon à ne pas entrer en contact avec les billes côté grand diamètre (15).

3. Palier à billes à double rangée (11) comprenant :
une bague extérieure (12) qui comporte deux rangées de surfaces de chemin de roulement (12a, 12b) ayant des diamètres différents l'une de l'autre ;
un bague intérieure (13) qui comporte deux rangées de surfaces de chemin de roulement (13a, 13b) qui correspondent aux deux rangées de surfaces de chemin de roulement (12a, 12b) de la bague extérieure (12) ; et
une pluralité de billes côté petit diamètre (14) et une pluralité de billes côté grand diamètre (15) qui sont agencées entre les deux rangées de surfaces de chemin de roulement (12a, 12b) de la bague extérieure (12) et les deux rangées de surfaces de chemin de roulement (13a, 13b) de la bague intérieure (13) avec différents diamètres primitifs des séries de billes, dans lequel :
une partie faisant saillie vers l'intérieur (21) qui s'étend plus radialement vers l'intérieur qu'une extrémité axialement extérieure d'une surface de chemin de roulement côté petit diamètre (12a) parmi les deux rangées de surfaces de chemin de roulement (12a, 12b) de la bague extérieure (12) est formée sur une partie d'extrémité côté petit diamètre de la bague extérieure (12) de façon à ne pas entrer en contact avec les billes côté petit diamètre (14), **caractérisé en ce que**
une face d'extrémité côté petit diamètre (12c) de la bague extérieure (12) est formée comme une surface rectifiée, et une face axialement extérieure (21a) de la partie faisant saillie vers l'intérieur (21) est formée comme une surface tournée située axialement vers l'intérieur de la face d'extrémité côté petit diamètre (12c) de la bague extérieure (12), et
la face axialement extérieure (21a) de la partie faisant saillie vers l'intérieur (21) est disposée de façon à ne pas être superposée avec la surface de chemin de roulement côté petit diamètre (12a) de la bague extérieure (12) dans la direction axiale.
